# EUROPÄISCHE PATENTSCHRIFT

(11) **EP 2 556 633 B1**
(45) Veröffentlichungstag und Bekanntmachung des Hinweises auf die Patenterteilung: **08.01.2014**
(21) Anmeldenummer: 11719144.5
(22) Anmeldetag: 07.04.2011
(51) Int. Cl.: H04L 12/70, H04J 3/06

(54) **VERFAHREN UND APPARAT ZUR FEHLERTOLERANTEN ZEITGESTEUERTEN ECHTZEITKOMMUNIKATION**
METHOD AND DEVICE FOR FAULT-TOLERANT, TIME-CONTROLLED REAL-TIME COMMUNICATION
PROCÉDÉ ET APPAREIL POUR LA COMMUNICATION EN TEMPS RÉEL TOLÉRANTE AUX ERREURS ET RÉGULÉE DANS LE TEMPS

(30) Priorität: 07.04.2010 AT 5572010
(43) Veröffentlichungstag der Anmeldung: 13.02.2013
(73) Patentinhaber: FTS Computertechnik GmbH, 1040 Wien (AT)
(72) Erfinder: BAUER, Guenther, A-1020 Wien (AT); POLEDNA, Stefan, A-3400 Klosterneuburg (AT); STEINER, Wilfried, A-2225 Zistersdorf (AT)
(74) Vertreter: Patentanwaltskanzlei Matschnig & Forsthuber OG
(86) Internationale Anmeldenummer: PCT/AT2011/000167
(87) Internationale Veröffentlichungsnummer: WO 2011/123877

(56) Entgegenhaltungen:
- WO-A1-2009/146471
- US-A1- 2004 153 897
- US-A1- 2008 122 503
- US-B1- 6 195 758

## Beschreibung

### Zitierte Patente

[1] EP 1 512 254 vom 10.5.2005: Zeitgesteuertes (Time-Triggered (TT)) Ethernet.
[2] EP 2 145 431 vom 07.04.2008: Kommunikationsverfahren und Apparat zur effizienten und sicheren Übertragung von TT-Ethernet Nachrichten.
[3] US 7,334,014 vom 19.02.2008: Consistent time service for fault-tolerant distributed systems.
[4] US 7,649,912 vom 19.01.2010: Time synchronization, deterministic data delivery and redundancy for cascaded nodes on full duplex Ethernet networks

### Sonstige Literatur:

[5] Kopetz, H. (1997). *Real-Time Systems, Design Principles for Distributed Embedded Applications; ISBN: 0-7923-9894-7.* Boston. Kluwer Academic Publishers.

### TECHNISCHES UMFELD

Diese Erfindung betrifft ein Verfahren und einen Apparat zur fehlertoleranten zeitgesteuerten Kommunikation und zum Aufbau einer fehlertoleranten globalen Zeit von bekannter Präzision im Kommunikationssystem eines verteilten Echtzeitcomputersystems.

### HINTERGRUND DIESER ERFINDUNG

Ein verteiltes Echtzeitsystem besteht aus einer Anzahl von Rechnerknoten, den *Endsystemen,* in denen die Applikationssoftware abläuft und einem generischen Kommunikationssystem, über das die Nachrichten der Endsysteme untereinander ausgetauscht werden. In verteilten Echtzeitsystemen muss eine globale fehlertolerante Zeitbasis von guter Präzision aufgebaut werden, damit die Endsysteme die zeitliche Gültigkeit der Echtzeitinformation überprüfen können und synchronisierte verteilte Aktionen ausführen können. Der Aufbau einer fehlertoleranten globalen Zeitbasis erfordert die Ausführung aufwendiger Synchronisationsalgorithmen. Um die Endsysteme von diesen Synchronisationsaufgaben zu entlasten, wird erfindungsgemäß die-verteilte fehlertolerante Uhrensynchronisation im generischen Kommunikationssystem vorgenommen, so dass die Endsysteme über eine einfache fehlertolerante *Master-Slave Synchronisation* (siehe Lehrbuch [5], Kapitel 3) mit der globalen Zeit versorgt werden können.

Viele der bekannten Verfahren der Uhrensynchronisation, wie z.B. die in den zitierten Patenten [1]-[4] veröffentlichen Verfahren, verwenden die Uhren der Endsysteme, um eine globale Zeit aufzubauen. Um dies zu erreichen, müssen in den Endsystemen aufwendige Synchronisationsalgorithmen ausgeführt werden. Entsprechend der vorliegenden Erfindung wird eine fehlertolerante Zeit nicht in den Endsystemen, sondern innerhalb des Kommunikationssystems aufgebaut. Zu diesem Zweck wird eine fehlertoleranter Vermittlungseinheit *(fehlertoleranter Switch)* vorgestellt, die vier unabhängige Vermittlungseinheiten enthält, wobei jede Vermittlungseinheit eine autonome Fehlereindämmungseinheit (*Fault-Containment Unit-FCU*) bildet. Diese vier Vermittlungseinheiten bauen gemeinsam durch den Austausch von Nachrichten eine fehlertolerante Zeitbasis auf. Jeweils zwei der vier Vermittlungseinheiten bilden ein *Switchpaar,* so dass in der fehlertoleranten Vermittlungseinheit zwei Switchpaare enthalten sind. Jede der beiden Vermittlungseinheiten eines Switchpaares sendet periodisch je eine Synchronisationsnachricht an einen Vergleicher, der eine Synchronisationsnachricht nur dann an ein Endsystem weiterleitet, wenn beide empfangene Synchronisationsnachrichten nahezu gleichzeitig eintreffen und inhaltlich identisch sind. Da sich in der fehlertoleranten Vermittlungseinheit zwei Switchpaare befinden, wird durch dieses Verfahren ein beliebiger Fehler in einem Switchpaar toleriert.

Weitere relevante Veröffentlichungen sind US2008/122503 A1 vom 29.05.2008 und US 6,195,758 B1 vom 27.02.2001.

Der genaue Ablauf des neuen Verfahrens zur fehlertoleranten Kommunikation und fehlertoleranten Uhrensynchronisation wird im folgenden Abschnitt anhand der Abbildungen genau beschrieben.

Die Aufgabe der Erfindung wird gelöst durch ein Verfahren zur fehlertoleranten Uhrensynchronisation und zur fehlertoleranten zeitgesteuerten Echtzeitkommunikation unter Verwendung einer Anzahl von Endsystemen und einem oder mehreren fehlertoleranten Switches, die je über mindesten zwei Kommunikationskanäle verbunden sind, wobei jeder fehlertolerante Switch ein erstes und ein zweites Switchpaar enthält und wo das erste Switchpaar einen ersten und einen zweiten Switch enthält und wo das zweite Switchpaar einen dritten und einen vierten Switch enthält, und wo jeder der vier Switches über Kommunikationskanäle mit den anderen drei Switches verbunden ist, und wo die vier Switches über einen bekannten nachrichtenbasierten internen fehlertoleranten Synchronisationsalgorithmus über die Kommunikationskanäle eine interne globale fehlertolerante Zeitbasis mit bekannter Präzision aufbauen, und wo eine Vielzahl von Endsystemen jeweils über einen einem Endsystem zugeordneten Vergleicher an die beiden Switchpaare angeschlossen werden kann, und wo ein erstes Endsystem jeweils eine Kopie einer an ein Endsystem zu sendenden Nachricht über den ersten Kommunikationskanal an das erste Switchpaar und über den zweiten Kommunikationskanal an das zweite Switchpaar sendet und wo der erste Vergleicher die eintreffende Nachricht über einen Kommunikationskanal an den ersten Switch und über einen Kommunikationskanal an den zweiten Switch sendet und wo der dritte Vergleicher die eintreffende Nachricht über einen Kommunikationskanal an den dritten Switch und über einen Kommunikationskanal an den vierten Switch sendet und wo die vier Switches die eintreffenden Nachrichten vermitteln und falls eine Nachricht an das zweite Endsystem adressiert ist die Switches je eine Kopie der Nachricht über Kommunikationskanäle an den dem zweiten Endsystem zugeordneten zweiten Vergleicher senden und wo der zweite Vergleicher unmittelbar nach Eintreffen der zeitlich ersten Nachricht ein Zeitfenster von der Dauer D öffnet und falls in diesem Intervall ***D*** keine zweite Kopie dieser Nachricht beim zweiten Vergleicher eintrifft der zweite Vergleicher die Nachricht verwirft und falls in diesem Intervall ***D*** eine zweite Kopie der Nachricht eintrifft der zweite Vergleicher die beiden Nachrichten bitweise vergleicht und falls der Vergleich einen Bitfehler offenbart die Nachrichtenübertragung unterbricht und die Nachricht verwirft und falls alle Bits dieser Nachricht identisch sind, die vollständige Nachricht über den zweiten Kommunikationskanal an das zweite Endsystem sendet und wo das zweite Switchpaar analog vorgeht und somit im fehlerfreien Fall beim Endsystem zwei überprüfte Kopien einer Nachricht eintreffen und falls eines der beiden Switchpaare fehlerhaft ist oder einen Fehler erkennt und die Nachricht verwirft noch immer eine korrekte Nachricht beim zweiten Endsystem eintrifft und wo der fehlertolerante Switch zusätzlich zu den von den Endsystemen empfangen Nachrichten periodisch zwei im Switch generierte Synchronisationsnachrichten an alle angeschlossenen Endsysteme sendet, wobei eine Synchronisationsnachricht vom ersten Switchpaar gesendet wird und die andere Synchronisationsnachricht vom zweiten Switchpaar gesendet wird, und wo der Zeitpunkt des Eintreffens einer Synchronisationsnachricht bei einem Endsystem dem Zeitpunkt entspricht, der im Datenfeld der Synchronisationsnachricht enthalten ist.

Günstigerweise sind die beiden Switchpaare räumlich getrennt voneinander angeordnet.

In einer Variante des Verfahrens werden im Rahmen der Uhrensynchronisation signierte Nachrichten verwendet.

In einer weiteren Variante passt ein fehlertoleranter Switch nach dem Empfang einer externen Synchronisationsnachricht seine interne synchronisierte Zeit an die durch die externe Synchronisationsnachricht vorgegebene Zeit an.

Günstigerweise verzögern die Switches die Nachrichten nur um einige Bitlängen und im übermitteln sie im *cut-through* Verfahren an die Vergleicher.

In einer Variante der Erfindung verzögern die Vergleicher die Nachrichten nur um einige Bitlängen und übermitteln sie im *error-free-cut-through* Verfahren an das Endsystem.

Vorteilhafterweise senden die an einen fehlertoleranten Switch angeschlossenen Endsysteme eine Mischung von ereignisgesteuerten, bandbreitenbegrenzten, oder zeitgesteuerten Nachrichten.

In die Switches werden *a priori* Planungsinformationen über das erlaubte zeitliche Verhalten der Endsysteme geladen, so dass ein Switch ein fehlerhaftes zeitliches Verhalten eines Endsystems erkennen kann.

Vorteilhafterweise werden die a priori Planungsinformationen an den Switch mit einer elektronischen Unterschrift des Senders versehen.

Es ist weiters günstig, wenn die a priori Planungsinformationen an den Switch verschlüsselt werden.

In einer Variante der Erfindung können die a priori Planungsinformationen dynamisch während des Betriebes geändert werden.

Günstigerweise werden die Vergleicher im Multiplex-Verfahren betrieben.

In einer weiteren Variante der Erfindung werden die unterschiedlichen Signallaufzeiten auf den Kommunikationskanälen von den Switchpaaren kompensiert.

Vorteilhafterweise entsprechen die von den Endsystemen produzierten und konsumierten Nachrichten dem Ethernet Standard.

Die Aufgabe der Erfindung wird weiters gelöst durch einen Apparat zur fehlertoleranten zeitgesteuerten Echtzeitkommunikation bestehend aus einem oder mehreren fehlertoleranten Switches die je über mindesten zwei Kommunikationskanäle verbunden sind, wobei jeder fehlertoleranten Switch zwei Switchpaare enthält und wo das erste Switchpaar einen ersten und einen zweiten Switch enthält und wo das zweite Switchpaar einen dritten und einen vierten Switch enthält, und wo jeder der vier Switches über die Kommunikationskanäle mit den anderen drei Switches verbunden ist, und wo eine Vielzahl von Endsystemen jeweils über ein dem Endsystem zugeordnetes dediziertes Vergleicher an die beiden Switchpaare angeschlossen werden kann, und wo in diesem Apparat einer oder mehrere der oben angeführten Verfahrenschritte realisiert werden.

### ZUSAMMENFASSUNG

Die vorliegende Erfindung hat zum Ziel in einem fehlertoleranten Kommunikationssystem eines verteilten Echtzeitsystems eine fehlertolerante globale Zeit aufzubauen. Zu diesem Zweck wird eine *fehlertolerante Nachrichtenvermittlungseinheit* vorgestellt, die aus vier unabhängigen Vermittlungseinheiten besteht. Diese vier unabhängigen Vermittlungseinheiten bauen gemeinsam eine fehlertolerante Zeit auf. Die Endsysteme werden über zwei unabhängige *fail-silent* Kommunikationskanäle an eine fehlertolerante Nachrichtenvermittlungseinheit angebunden, so dass selbst bei Ausfall eines Teils der fehlertoleranten Vermittlungseinheit oder eines Kommunikationskanals die Uhrensynchronisation und die Netzwerkverbindungen aufrecht bleiben.

### KURZE BESCHREIBUNG DER ABBILDUNGEN

Das vorab beschriebene Ziel und andere neue Eigenschaften der vorliegenden Erfindung werden an Hand der angeführten Abbildungen erläutert.
Fig. 1 zeigt ein Beispiel für die Struktur fehlertoleranten Kommunikationssystems, das aus mehreren fehlertoleranten Vermittlungseinheiten besteht.
Fig. 2 zeigt den inneren Aufbau einer fehlertoleranten Vermittlungseinheit.

### BESCHREIBUNG EINER REALISIERUNG

Im folgenden Abschnitt wird eine mögliche Realisierung des neuen Verfahrens an einem Beispiel mit drei Switches und einer Anzahl von Endsystemen gezeigt. Dieses Beispiel zeigt eine konkrete von vielen möglichen Realisierungen des in den Patentansprüchen beschriebenen Verfahrens.

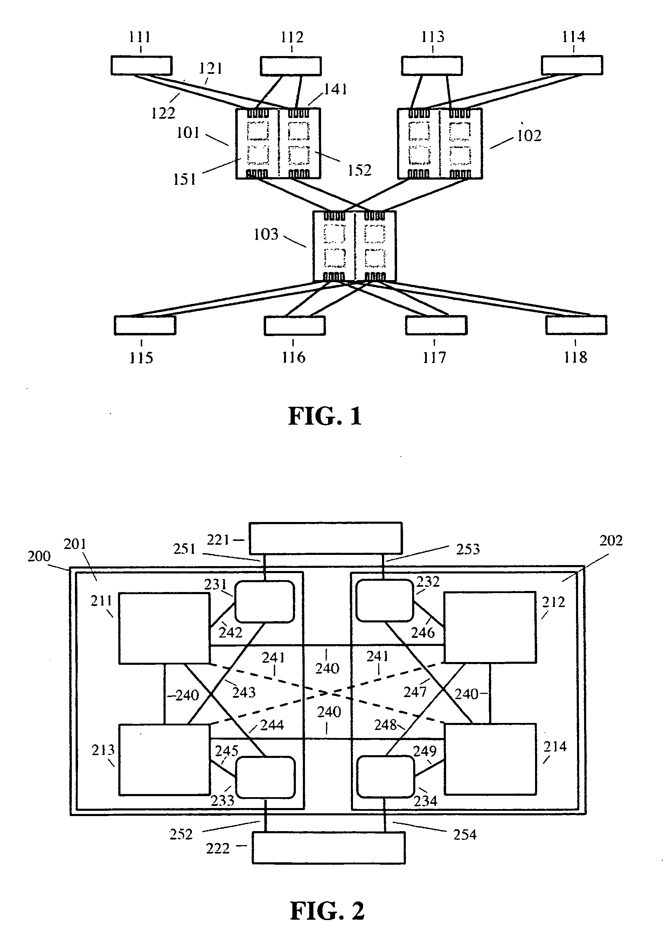

Fig. 1 zeigt eine Konfiguration mit drei fehlertoleranten Vermittlungseinheiten **101,102** und **103**-im folgenden *Switches* genannt-und acht Endsystemen **111** bis **118.** Ein *Endsystem* ist ein *Knotenrecher,* in dem ein Teil einer verteilten Echtzeitapplikation abläuft. Die drei Switches **101, 102** und **103** sind untereinander mittels jeweils zwei Kommunikationskanäle **121** und **122** verbunden, da der Ausfall eines Kommunikationskanals toleriert werden muss. Jeder Switch, z.B., der Switch **101** beinhaltet zwei Switchpaare, **151** und **152,** wobei jedes Switchpaar aus zwei Switches besteht. Jeder Switch bildet eine autonome Fehlereindämmungseinheit (*Fault-Containment Unit-FCU*). Das Endsystem **111** ist über den Kommunikationskanal **121** mit dem linken Switchpaar **151** und über den Kommunikationskanal **122** mit dem rechten Switchpaar **152** des fehlertoleranten Switches **101** verbunden. Analog sind die anderen Endsysteme **112** bis **118** über jeweils einen Kommunikationskanal mit dem einen Switchpaar und mit dem anderen Kommunikationskanal mit dem anderen Switchpaar eines fehlertoleranten Switches verbunden.
Fig. 2 zeigt den inneren Aufbau eines fehlertoleranten Switches **200.** Die Anzahl ***n*** der Endsysteme, die an einem Switch angeschlossen werden können, wird durch diese Erfindung nicht fest gelegt und hängt von dem konkreten Aufbau des fehlertoleranten Switches ab. Typischerweise liegt ***n*** zwischen 8 und 16. Zum Beispiel lassen sich im fehlertoleranten Switch **101** auf der oberen und unteren Seite jeweils vier Endsysteme anschließen. Um die Fig. 2 zu vereinfachen sind im fehlertoleranten Switch **200** nur zwei Endsysteme, das erste Endsystem **221** und das zweite Endsystem **222** angeführt.

Der fehlertolerante Switch **200** besteht aus den beiden Switchpaaren **201** und **202.** Das erste Switchpaar **201** besteht aus den beiden (nicht fehlertoleranten) Switches **211** und **213,** dem ersten Switch **211** und dem zweiten Switch **213** sowie den Vergleichern **231** und **233,** dem ersten Vergleicher **231** und dem zweiten Vergleicher **233.** Das zweite Switchpaar **202** besteht aus den beiden (nicht fehlertoleranten) Switches **212** und **214,** dem dritten Switch **212** und dem vierten Switch **214** sowie den Vergleichern **232** und **234,** dem dritten Vergleicher **232** und dem vierten Vergleicher **234.**

Jedem Endsystem sind somit zwei Vergleicher zugeordnet, einer vom rechten und einer vom linken Switchpaar. Erfindungsgemäß können die Vergleicher auch *multiplexed* werden, so dass sich je ein Vergleicher mit ***n*** Ein/Ausgängen **251** bzw. **252** zu ***n*** Endsystemen **221** bzw. **222** in einem Switchpaar befindet. Jeder der vier Switches **211, 212, 213, 214** bildet eine autonome Fehlereindämmungseinheit *(Fault Containment Unit).* Die vier Switches **211, 212, 213, 214** sind über Kommunikationskanäle **240, 241** miteinander verbunden.

Am Beispiel des ersten Switches **211:** Der erste Switch **211** ist entweder über die Kommunikationskanäle **240** mit den horizontal und vertikal benachbarten Switches, in diesem Fall den zweiten Switch **213** und den dritten Switch **212,** verbunden, und über diese mit dem vierten Switch **214.** Oder der erste Switch **211** ist über den Kommunikationskanal **241** mit dem vierten Switch **214** verbunden und über diesen, bzw. entsprechende Kommunikationskanäle **240, 241,** mit den anderen Switches. Des Weiteren kann der erste Switch **211** wie in Fig. 2 über Kommunikationskanäle **240** mit den horizontal und vertikal benachbarten Switches (zweiter Switch **213** und dritter Switch **212)** verbunden sein und über einen Kommunikationskanal **241** mit dem vierten Switch **214** verbunden sein.

Es sind also zumindest Kommunikationskanäle **240** vorzusehen, auf die Kommunikationskanäle **241** kann verzichtet werden (siehe unten).

Über diese Kommunikationskanäle **240** und **241** werden periodisch interne Synchronisationsnachrichten ausgetauscht, um eine interne globale fehlertolerante Zeit mit der bekannten Präzision ***P*** aufzubauen. Dies geschieht mittels eines fehlertoleranten nachrichtenbasierten Uhrensynchronisationsalgorithmus für die interne Uhrensynchronisation, wie er z.B. in Kapitel 3 des Lehrbuchs [5] erklärt ist.

Wenn die internen Synchronisationsnachrichten mit einer elektronischen Unterschrift des Senders ausgestattet werden, so sind erfindungsgemäß die beiden Verbindungen **241** nicht erforderlich. In sicherheitskritischen Applikationen ist es vorteilhaft die beiden Switchpaare **201** und **202,** die einen fehlertoleranten Switch bilden, räumlich entfernt anzuordnen, damit Fehler die an einem Ort im Raum auftreten (*spatial proximity faults*) toleriert werden können. In einem solchen Fall ist es vorteilhaft, wenn die Anzahl der Verbindungsleitungen zwischen den Switchpaaren auf die beiden Kanäle **240** reduziert wird.

Ein ausgewählter Switch, z.B., Switch **103** in Fig. 1, oder ein Endsystem das mit einer Zeitquelle, z.B. einen GPS Zeitempfänger ausgerüstet ist, kann an die angeschlossenen Switches eine externe Zeitbasis vorgeben. Dies geschieht über *externe Synchronisationsnachrichten,* die die externe Zeit enthalten. Nach dem Empfang einer solchen externen Synchronisationsnachricht muss der empfangende fehlertolerante Switch seine interne Uhrensynchronisation an die extern vorgegebene Zeit anpassen. Wenn die externe Zeitquelle ausfällt, so hält der fehlertolerante interne Synchronisationsalgorithmus die globale Zeit aufrecht. Die externe Zeitquelle kann auch benutzt werden, um den Uhrengang der Switches **211, 212, 213, 214** dynamisch an den Gang der externen Zeit anzupassen.

Wenn das erste Endsystem **221** eine Nachricht an das zweite Endsystem **222** zu senden beabsichtigt, so wird diese Nachrichte parallel über den ersten Kommunikationskanal **251** an den ersten Vergleicher **231** im ersten Switchpaar **201** und über den dritten Kommunikationskanal **253** an den dritten Vergleicher **232** im zweiten Switchpaar **202** gesendet. Das Format dieser Nachricht kann einem gegeben Standard entsprechen, z.B. dem weit verbreiteten Ethernet Standard oder dem AFDX Standard, aber auch jedem anderen Standard der vorgibt, dass die Adressinformation im *Header* der Nachricht enthalten sein muss damit die Nachrichten von den Switches **211, 212, 213, 214** im schnellen *cut-through* Verfahren vermittelt werden können.

Die Nachrichten können vom ersten Endsystem **221** zeitgesteuert, bandbreitenbegrenzt oder ereignisgesteuert gesendet werden. Bei zeitgesteuerten Nachrichten können die Switches **211, 212, 213, 214** *a priori* mit *Planungsinformationen* versorgt werden, die die erlaubten Zeitpunkte des Sendens einer zeitgesteuerten Nachricht von einem Endsystem vorgeben. Eine zu einem falschen Zeitpunkt vom ersten Endsystem **221** gesendete zeitgesteuerte Nachricht kann dann von den Switches **211, 212, 213, 214** erkannt und verworfen werden. Bei bandbreitenbegrenzten Nachrichten können die Switches **211, 212, 213, 214** *a priori* mit Planungsinformationen versorgt werden, die die erlaubte Bandbreite des Sendens von bandbreitenbegrenzten Nachrichten vorgeben. Wenn die vom ersten Endsystem **221** gesendete bandbreitenbegrenzten Nachrichten über die erlaubte Bandbreite hinausgehen, können die Switches **211, 212, 213, 214** die Annahme von weiteren Nachrichten verweigern.

Die *a priori Planungsinformationen,* die an die Switches **211, 212, 213, 214** vor der Durchführung einer Nachrichtenübertragung von einem Entwurfssystem zur gesendet werden, können mit einer elektronischen Unterschrift versehen werden, so dass die Switches **211, 212, 213, 214** überprüfen können, ob diese Informationen von einem autorisierten Entwurfssystem stammen. Alternativ können die Planungsinformationen verschlüsselt gesendet werden. Die a priori Planungsinformationen können während des Betriebs durch das Senden einer neuen Nachricht mit den neuen Planungsinformationen und dem Zeitpunkt, ab wann diese neue Planungsinformationen anzuwenden sind, dynamisch geändert werden.

Im Folgenden wird die Nachrichtenbearbeitung im ersten Switchpaar **201** genau beschrieben. Eine vom ersten Kommunikationskanal **251** im ersten Vergleicher **231** eintreffende Nachricht wird vom ersten Vergleicher **231** über den Kommunikationskanal **242** an den ersten Switch **211** und über den Kommunikationskanal **243** an den zweiten Switch **213** zur Vermittlung weitergeleitet. Aufgrund der im *Header* einer Nachricht enthaltenen Adressinformation wird die Nachricht vom ersten Switch **211** über den Kommunikationskanal **244** und vom zweiten Switch **213** über den Kommunikationskanal **245** an den adressierten Vergleicher-im Beispiel an den zweiten Vergleicher **233**-weitergeleitet. Sobald die zeitlich erste an den zweiten Vergleicher **233** adressierte Nachricht von einem der beiden Switches **211** oder **213** beim zweiten Vergleicher **233** eintrifft, eröffnet der zweite Vergleicher **233** ein Zeitfenster von der *a priori* vorgegebenen Dauer ***D.*** Wenn innerhalb dieses Zeitfensters ***D*** die zeitlich zweite Nachricht vom anderen Switch des ersten Switchpaares **201** nicht eintrifft, verwirft der Vergleicher die erste Nachricht und in der Folge auch die zweite Nachricht (falls sie jemals eintrifft). Wenn innerhalb dieses Zeitfensters ***D*** die zweite Nachricht vom anderen Switch des ersten Switchpaares **201** eintrifft, dann vergleicht der zweite Vergleicher **233** die beiden Nachrichten bitweise und leitet sie umgehend über den zweiten Kommunikationskanal **252** an das adressierte (zweite) Endsystem **222** weiter. Dieser Vergleich der beiden Nachrichten kann im *error-free-cut-through* Verfahren erfolgen, d.h. die eintreffenden Bitströme werden im zweiten Vergleicher **233** nur kurz verzögert, laufend verglichen und sofort weitergeleitet falls der Bitvergleich richtig ist. Im Fehlerfall wird der Bitstrom zum (zweiten) Endsystem 222 abgebrochen. Da jede Nachricht ein CRC Feld enthält, kann das (zweite) Endsystem **222** eine abgebrochene Nachricht erkennen und verwerfen.

Die Dauer der notwendigen Verzögerung einer Nachricht im zweiten Vergleicher **233** hängt von der Präzision ***P*** der Uhrensynchronisation ab, die im wesentlichen von der Dauer der Synchronisationsperiode und der Qualität der verwendeten Oszillatoren bestimmt wird. Die Anzahl der Bits, die im Vergleicher gespeichert werden müssen, hängt von der Präzision ***P*** und der Bandbreite der Datenübertragung ab.

Die Vergleicher **231, 232, 233, 234** sind so ausgelegt, dass keine vollständige Nachricht in einem Vergleicher gespeichert werden kann und kein Vergleicher über die Informationen verfügt, wie ein korrektes CRC Feld einer Nachricht zu bilden ist. Es ist somit äußerst unwahrscheinlich, dass ein fehlerhafter Vergleicher eine *syntaktische korrekte aber inhaltlich falsche Nachricht* erzeugen kann oder eine *syntaktische korrekte aber inhaltlich falsche Nachricht* zu einem anderen als vom ersten 211 oder dritten Switch 212 produzierten Zeitpunkt senden kann. Vom ersten Switchpaar **201** wird somit nur dann eine syntaktisch korrekte Nachricht an das (zweite) Endsystem **222** über den zweiten Kommunikationskanal **252** weitergeleitet, wenn alle vier Subsysteme **231, 211, 213** und **233** fehlerfrei funktionieren und der Nachrichtentransport über die Kanäle **251, 242, 243, 244, 245,** und **252** fehlerfrei abläuft. Das erste Switchpaar 201 realisiert somit am zweiten Kommunikationskanal **252** die f*ail-silent Abstrakion:* es produziert entweder Nachrichten die im Wertebereich und im Zeitbereich richtig sind oder es produziert keine Nachrichten. Das zweite Switchpaar **202** funktioniert analog zum ersten Switchpaar **201.**

Zusätzlich zu den von den Endsystemen empfangen Nachrichten sendet der fehlertolerante Switch **200** periodisch zwei intern generierte Synchronisationsnachrichten an alle angeschlossenen Endsystemen, wobei nahezu gleichzeitig eine Synchronisationsnachricht vom linken (ersten) Switchpaar **201** über den ersten 251 und zweiten Kommunikationskanal **252** und eine zweite Synchronisationsnachricht vom rechten (zweiten) Switchpaar über den dritten 253 und vierten Kommunikationskanal **254** gesendet wird. Der Zeitpunkt des Eintreffens einer Synchronisationsnachricht bei einem Endsystem entspricht jenem Zeitpunkt, der im Datenfeld der Synchronisationsnachricht enthalten ist. Da die Signallaufzeiten auf den Kommunikationskanälen **251, 252, 253, 254** aufgrund der unterschiedlichen Länge diese Signallaufzeiten auf den Kommunikationskanäle unterschiedlich sind, kann eine Korrektur des Eintreffenszeitpunkts eine Synchronisationsnachricht beim Endsystem erforderlich werden. Diese Korrektur kann entweder im Endsystem oder in den Switchpaaren **201, 202** erfolgen.

Im fehlerfreien Fall erhält das (zweite) Endsystem **222** somit zwei richtige Synchronisationsnachrichten, eine über den (zweiten) Kommunikationskanal **252** und die andere über den (vierten) Kommunikationskanal **254,** deren Eintreffenszeitpunkte sich maximal um die Präzision ***P*** unterscheiden. Wenn in einem Switchpaar ein Fehler auftritt, so erhält das (zweite) Endsystem **222** noch immer eine richtige Synchronisationsnachricht.

### WIRTSCHAFTLICHE VORTEILE

Die vorliegende Erfindung ermöglicht es mit Standardkomponenten, d.h., Komponenten die nicht die *self-checking* Eigenschaft besitzen, eine fehlertolerante Zeitbasis und einen fehlertoleranten Switch aufzubauen, der *einen beliebigen **Fehler*** in einer Fehlereindämmungseinheit (*Fault-Containment Unit-FCU*) toleriert. In Fig. 2 sind folgende Subsysteme *Fehlereindämmungseinheiten:* die vier Switches **211, 212, 213, 214** und die vier Vergleicher **231, 232, 233, 234.** Besonderes Augenmerk verdient das letzte Subsystem, der Vergleicher, der vor der Ausgabe einer Nachricht an das Endsystem angeordnet ist. Durch die beschriebenen Konstruktionsmaßnahmen kann ausgeschlossen werden, dass ein fehlerhafter Vergleicher eine syntaktisch korrekte aber inhaltlich falsche Nachricht produziert, obwohl der Vergleicher selbst nicht als *self-checking Checker* ausgeführt werden muss.

Durch den erfindungsgemäßen Aufbau eines fehlertoleranten Switches, der eine fehlertolerante Uhrensynchronisation beinhaltet, ergeben sich folgende weitere wesentliche wirtschaftliche Vorteile:
- Es wird verhindert, dass im Fehlerfall falsche Ergebnisse produziert werden. Diese Eigenschaft ist in sicherheitskritischen Systemen von besonderer Wichtigkeit.

- Durch die Tolerierung eines Fehlers wird die Zuverlässigkeit eines fehlertoleranten Switches im Vergleich mit einem nicht-fehlertoleranten Switch wesentlich verbessert.
- Der Uhrensynchronisationsalgorithmus muss nur einmal entwickelt, getestet und zertifiziert und kann in einer Vielzahl von Anwendungen eingesetzt werden.
- Durch die Verlagerung der fehlertoleranten Uhrensynchronisation von den Endsystemen in das Kommunikationssystem werden die Endsysteme wesentlich einfacher und kostengünstiger.
- Eine generische Lösung der Uhrensynchronisation im Kommunikationssystem kann in einem VLSI Chip sehr kostengünstig implementiert werden.

## Patentansprüche

1. Verfahren zur fehlertoleranten Uhrensynchronisation und zur fehlertoleranten zeitgesteuerten Echtzeitkommunikation unter Verwendung einer Anzahl von Endsystemen **(221, 222)** und einem oder mehreren fehlertoleranten Switches **(200)** die je über mindesten zwei Kommunikationskanäle verbunden sind, **dadurch gekennzeichnet, dass** jeder fehlertolerante Switch **(200)** ein erstes **(201)** und ein zweites Switchpaar **(202)** enthält, wobei das erste Switchpaar **(201)** einen ersten **(211)** und einen zweiten Switch **(213)** enthält und das zweite Switchpaar **(202)** einen dritten **(212)** und einen vierten Switch **(214)** enthält, und wobei jeder der vier Switches **(211, 212, 213, 214)** über Kommunikationskanäle **(240, 241)** mit den anderen drei Switches verbunden ist, wobei die vier Switches über einen bekannten nachrichtenbasierten internen fehlertoleranten Synchronisationsalgorithmus über die Kommunikationskanäle **(240, 241)** eine interne globale fehlertolerante Zeitbasis mit bekannter Präzision **(*P*)** aufbauen, und wobei eine Vielzahl von Endsystemen **(221, 222)** jeweils über einen einem Endsystem zugeordneten Vergleicher an die beiden Switchpaare **(201, 202)** angeschlossen werden kann, wobei ein erstes Endsystem **(221)** jeweils eine Kopie einer an ein Endsystem zu sendenden Nachricht über den ersten Kommunikationskanal **(251)** an das erste Switchpaar **(201)** und über den zweiten Kommunikationskanal **(253)** an das zweite Switchpaar **(202)** sendet, wobei der erste Vergleicher **(231)** die eintreffende Nachricht über einen Kommunikationskanal **(242)** an den ersten Switch **(211)** und über einen Kommunikationskanal **(243)** an den zweiten Switch **(213)** sendet und der dritte Vergleicher **(232)** die eintreffende Nachricht über einen Kommunikationskanal **(246)** an den dritten Switch **(212)** und über einen Kommunikationskanal **(247)** an den vierten Switch **(214)** sendet, und wobei die vier Switches die eintreffenden Nachrichten vermitteln und, falls eine Nachricht an das zweite Endsystem **(222)** adressiert ist, die Switches **(211, 213)** je eine Kopie der Nachricht über Kommunikationskanäle **(244, 245)** an den dem zweiten Endsystem **(222)** zugeordneten zweiten Vergleicher **(233)** senden, wobei der zweite Vergleicher **(233)** unmittelbar nach Eintreffen der zeitlich ersten Nachricht ein Zeitfenster von der Dauer ***D*** öffnet und, falls in diesem Intervall ***D*** keine zweite Kopie dieser Nachricht beim zweiten Vergleicher (233) eintrifft, der zweite Vergleicher **(233)** die Nachricht verwirft und, falls in diesem Intervall ***D*** eine zweite Kopie der Nachricht eintrifft, der zweite Vergleicher (233) die beiden Nachrichten bitweise vergleicht und, falls der Vergleich einen Bitfehler offenbart, die Nachrichtenübertragung unterbricht und die Nachricht verwirft und, falls alle Bits dieser Nachricht identisch sind, die vollständige Nachricht über den zweiten Kommunikationskanal **(252)** an das zweite Endsystem **(222)** sendet, wobei das zweite Switchpaar **(202)** analog vorgeht, und somit im fehlerfreien Fall beim Endsystem zwei überprüfte Kopien einer Nachricht eintreffen und, falls eines der beiden Switchpaare **(201, 202)** fehlerhaft ist oder einen Fehler erkennt und die Nachricht verwirft, noch immer eine korrekte Nachricht beim zweiten Endsystem **(222)** eintrifft, wobei der fehlertolerante Switch **(200)** zusätzlich zu den von den Endsystemen empfangen Nachrichten periodisch zwei im Switch **(200)** generierte Synchronisationsnachrichten an alle angeschlossenen Endsysteme sendet, wobei eine Synchronisationsnachricht vom ersten Switchpaar **(201)** gesendet wird und die andere Synchronisationsnachricht vom zweiten Switchpaar **(202)** gesendet wird, und wobei der Zeitpunkt des Eintreffens einer Synchronisationsnachricht bei einem Endsystem dem Zeitpunkt entspricht, der im Datenfeld der Synchronisationsnachricht enthalten ist.

2. Verfahren nach Anspruch 1, **dadurch gekennzeichnet, dass** die beiden Switchpaare (201, 202) räumlich getrennt voneinander angeordnet sind.

3. Verfahren nach Anspruch 1 oder 2, **dadurch gekennzeichnet, dass** im Rahmen der Uhrensynchronisation signierte Nachrichten verwendet werden und daher auf die beiden Kommunikationskanäle **(241)** verzichtet werden kann.

4. Verfahren nach einem der Ansprüche 1 bis 3, **dadurch gekennzeichnet, dass** ein fehlertoleranter Switch (200) nach dem Empfang einer externen Synchronisationsnachricht seine interne synchronisierte Zeit an die durch die externe Synchronisationsnachricht vorgegebene Zeit anpasst.

5. Verfahren nach einem der Ansprüche 1 bis 4, **dadurch gekennzeichnet, dass** die Switches **(211, 212, 213, 214)** die Nachrichten nur um einige Bitlängen verzögern und im *cut-through* Verfahren an die Vergleicher **(231, 232, 233, 234)** übermitteln.

6. Verfahren nach einem der Ansprüche 1 bis 5, **dadurch gekennzeichnet, dass** die Vergleicher **(231, 232, 233, 234)** die Nachrichten nur um einige Bitlängen verzögern und im *error-free-cut-through* Verfahren an das Endsystem übermitteln.

7. Verfahren nach einem der Ansprüche 1 bis 6, **dadurch gekennzeichnet, dass** die an einen fehlertoleranten Switch **(200)** angeschlossenen Endsysteme **(221, 222)** eine Mischung von ereignisgesteuerten, bandbreitenbegrenzten, oder zeitgesteuerten Nachrichten senden.

8. Verfahren nach einem der Ansprüche 1 bis 7, **dadurch gekennzeichnet, dass** in die Switches (211, 212, 213, 214) *a priori* Planungsinformationen über das erlaubte zeitliche Verhalten der Endsysteme (221, 222) geladen werden, so dass ein Switch ein fehlerhaftes zeitliches Verhalten eines Endsystems erkennen kann.

9. Verfahren nach Anspruch 8, **dadurch gekennzeichnet, dass** die a-priori Planungsinformationen an den Switch mit einer elektronischen Unterschrift des Senders versehen werden.

10. Verfahren nach Anspruch 8 oder 9, **dadurch gekennzeichnet dass** die a-priori Planungsinformationen an den Switch verschlüsselt werden.

11. Verfahren nach einem der Ansprüche 8 bis 10, **dadurch gekennzeichnet, dass** die a-priori Planungsinformationen dynamisch während des Betriebes geändert werden können.

12. Verfahren nach einem der Ansprüche 1 bis 11, **dadurch gekennzeichnet, dass** die Vergleicher (231, 232, 233, 234) im Multiplex-Verfahren betrieben werden.

13. Verfahren nach einem der Ansprüche 1 bis 12, **dadurch gekennzeichnet, dass** die unterschiedlichen Signallaufzeiten auf den Kommunikationskanälen (251, 252, 253, 254) von den Switchpaaren (201, 202) kompensiert werden.

14. Verfahren nach einem der Ansprüche 1 bis 13, **dadurch gekennzeichnet, dass** die von den Endsystemen produzierten und konsumierten Nachrichten dem Ethernet Standard entsprechen.

15. Apparat zur fehlertoleranten zeitgesteuerten Echtzeitkommunikation bestehend aus einem oder mehreren fehlertoleranten Switches die je über mindesten zwei Kommunikationskanäle verbunden sind, **dadurch gekennzeichnet, dass** jeder fehlertoleranten Switch **(200)** zwei Switchpaare **(201, 202)** enthält, wobei das erste Switchpaar **(201)** einen ersten **(211)** und einen zweiten Switch **(213)** enthält und das zweite Switchpaar **(202)** einen dritten **(212)** und einen vierten Switch **(214)** enthält, und wobei jeder der vier Switches **(211, 212, 213, 214)** über die Kommunikationskanäle **(240, 241)** mit den anderen drei Switches verbunden ist, und wobei eine Vielzahl von Endsystemen jeweils über ein dem Endsystem zugeordnetes dediziertes Vergleicher an die beiden Switchpaare **(201, 202)** angeschlossen werden kann,
wobei der Apparat dazu eingerichtet ist, dass für jeweils eine Kopie einer an ein Endsystem zu sendenden Nachricht, die von einem ersten Endsystem **(221)** über den ersten Kommunikationskanal **(251)** an das erste Switchpaar **(201)** und über den zweiten Kommunikationskanal **(253)** an das zweite Switchpaar **(202)** gesendet wird,
der erste Vergleicher **(231)** die eintreffende Nachricht über einen Kommunikationskanal **(242)** an den ersten Switch **(211)** und über einen Kommunikationskanal **(243)** an den zweiten Switch **(213)** sendet und der dritte Vergleicher **(232)** die eintreffende Nachricht über einen Kommunikationskanal **(246)** an den dritten Switch **(212)** und über einen Kommunikationskanal **(247)** an den vierten Switch **(214)** sendet, wobei die vier Switches die eintreffenden Nachrichten vermitteln und, falls eine Nachricht an das zweite Endsystem **(222)** adressiert ist, die Switches **(211, 213)** je eine Kopie der Nachricht über Kommunikationskanäle **(244, 245)** an den dem zweiten Endsystem **(222)** zugeordneten zweiten Vergleicher **(233)** senden, wobei der zweite Vergleicher **(233)** unmittelbar nach Eintreffen der zeitlich ersten Nachricht ein Zeitfenster von der Dauer ***D*** öffnet und, falls in diesem Intervall ***D*** keine zweite Kopie dieser Nachricht beim zweiten Vergleicher **(233)** eintrifft, der zweite Vergleicher (233) die Nachricht verwirft und, falls in diesem Intervall ***D*** eine zweite Kopie der Nachricht eintrifft, der zweite Vergleicher **(233)** die beiden Nachrichten bitweise vergleicht und, falls der Vergleich einen Bitfehler offenbart, die Nachrichtenübertragung unterbricht und die Nachricht verwirft und, falls alle Bits dieser Nachricht identisch sind, die vollständige Nachricht über den zweiten Kommunikationskanal **(252)** an das zweite Endsystem **(222)** sendet, wobei das zweite Switchpaar **(202)** analog vorgeht, und somit im fehlerfreien Fall beim Endsystem zwei überprüfte Kopien einer Nachricht eintreffen und, falls eines der beiden Switchpaare **(201, 202)** fehlerhaft ist oder einen Fehler erkennt und die Nachricht verwirft, noch immer eine korrekte Nachricht beim zweiten Endsystem **(222)** eintrifft, wobei der fehlertolerante Switch **(200)** zusätzlich zu den von den Endsystemen empfangenen Nachrichten periodisch zwei im Switch **(200)** generierte Synchronisationsnachrichten an alle angeschlossenen Endsysteme sendet, wobei eine Synchronisationsnachricht vom ersten Switchpaar **(201)** gesendet wird und die andere Synchronisationsnachricht vom zweiten Switchpaar **(202)** gesendet wird, und wobei der Zeitpunkt des Eintreffens einer Synchronisationsnachricht bei einem Endsystem dem Zeitpunkt entspricht, der im Datenfeld der Synchronisationsnachricht enthalten ist.

## Claims

1. A method for fault-tolerant clock synchronisation and for fault-tolerant time-triggered real-time communication using a number of terminal systems (221, 222) and one or more fault-tolerant switches (200), which are in each case connected via at least two communication channels, **characterised in that** each fault-tolerant switch (200) contains a first switch pair (201) and a second switch pair (202), wherein the first switch pair (201) contains a first switch (211) and a second switch (213) and the second switch pair (202) contains a third switch (212) and a fourth switch (214), and wherein each of the four switches (211, 212, 213, 214) are connected to the other three switches via communication channels (240, 241), wherein the four switches, via a known message-based internal fault-tolerant synchronisation algorithm, establish an internal global fault-tolerant time base of known precision (P) via the communication channels (240, 241), and wherein each of a plurality of terminal systems (221, 222) can be connected to the two switch pairs (201, 202) via a comparator associated with a particular terminal system, wherein a first terminal system (221) transmits to the first switch pair (201)via the first communication channel (251) and to the second switch pair (202) via the second communication channel (253) a copy of a message to be transmitted to a terminal system, wherein the first comparator (231) transmits the incoming message to the first switch (211) via a communication channel (242) and to the second switch (213) via a communication channel (243), and the third comparator (232) transmits the incoming message to the third switch (212) via a communication channel (246) and to the fourth switch (214) via a communication channel (247), and wherein the four switches impart the incoming messages and, if a message is addressed to the second terminal system (222), the switches (211, 213) each transmit a copy of the message via communication channels (244, 245) to the second comparator (233) associated with the second terminal system (222), wherein the second comparator (233) opens a time window of duration D immediately after arrival of the chronologically first message, and, if no second copy of this message arrives at the second comparator (233) during this interval D, the second comparator (233) discards the message, and, if a second copy of the message arrives during this interval D, the second comparator (233) compares the two messages bit by bit and, if the comparison reveals a bit error, interrupts the transmission of the message and discards the message, and, if all bits of this message are identical, transmits the entire message via the second communication channel (252) to the second terminal system (222), wherein the second switch pair (202) proceeds analogously, and therefore, in the fault-free case, two checked copies of a message arrive at the terminal system and, if one of the two switch pairs (201, 202) is faulty or identifies a fault and discards the message, a correct message still arrives at the second terminal system (222), wherein the fault-tolerant switch (200), in addition to the messages received by the terminal systems, periodically transmits two synchronisation messages generated in the switch (200) to all connected terminal systems, wherein one synchronisation message is transmitted by the first switch pair (201) and the other synchronisation message is transmitted by the second switch pair (202), and wherein the time at which a synchronisation message arrives at a terminal system corresponds to the time that is contained in the data field of the synchronisation message.

2. The method according to Claim 1, **characterised in that** the two switch pairs (201, 202) are arranged spatially separate from each other.

3. The method according Claim 1 or 2, **characterised in that** signed messages are used as part of the clock synchronisation and the two communication channels (241) therefore can be omitted.

4. The method according to one of Claims 1 to 3, **characterised in that**, after receiving an external synchronisation message, a fault-tolerant switch (200) adapts its internal synchronised time to the time predetermined by the external synchronisation message.

5. The method according to one of Claims 1 to 4, **characterised in that** the switches (211, 212, 213, 214) delay the messages only by a few bit lengths and transmit the messages to the comparators (231, 232, 233, 234) using the cut-through method.

6. The method according to one of Claims 1 to 5, **characterised in that** the comparators (231, 232, 233, 234) delay the messages only by a few bit lengths and transmit the messages to the terminal system using the error-free cut-through method.

7. The method according to one of Claims 1 to 6, **characterised in that** the terminal systems (221, 222) connected to a fault-tolerant switch (200) transmit a mixture of event-triggered, bandwidth-limited, or time-triggered messages.

8. The method according to one of Claims 1 to 7, **characterised in that** *a priori* planning information concerning the allowed temporal behaviour of the terminal systems (221, 222) is loaded into the switches (211, 212, 213, 214), such that a switch can detect a faulty temporal behaviour of a terminal systems.

9. The method according to Claim 8, **characterised in that** the *a priori* planning information for the switch is provided with an electronic signature of the sender.

10. The method according to Claim 8 or 9, **characterised in that** the *a priori* planning information for the switch is encrypted.

11. The method according to one of Claims 8 to 10, **characterised in that** the *a* priori planning information can be dynamically altered during operation.

12. The method according to one of Claims 1 to 11, **characterised in that** the comparators (231, 232, 233, 234) are operated in the multiplex method.

13. The method according to one of Claims 1 to 12, **characterised in that** the different signal propagation times on the communication channels (251, 252, 253, 254) are compensated for by the switch pairs (201, 202).

14. The method according to one of Claims 1 to 13, **characterised in that** the messages produced and consumed by the terminal systems correspond to the Ethernet standard.

15. A device for fault-tolerant, time-triggered real-time communication, consisting of one or more fault-tolerant switches, which are in each case connected via at least two communication channels, **characterised in that** each fault-tolerant switch (200) contains two switch pairs (201, 202), wherein the first switch pair (201) contains a first switch (211) and a second switch (213) and the second switch pair (202) contains a third switch (212) and a fourth switch (214), and wherein each of the four switches (211, 212, 213, 214) is connected via the communication channels (240, 241) to the other three switches, and wherein a plurality of terminal systems can each be connected via a dedicated comparator associated with the terminal system to the two switch pairs (201, 202),
wherein the device is designed such that, for each copy of a message that is to be transmitted to a terminal system and that is transmitted from a first terminal system (221) via the first communication channel (251) to the first switch pair (201) and via the second communication channel (253) to the second switch pair (202),
the first comparator (231) transmits the incoming message to the first switch (211) via a communication channel (242) and to the second switch (213)via a communication channel (243), and the third comparator (232) transmits the incoming message to the third switch (212)via a communication channel (246) and to the fourth switch (214)via a communication channel (247), wherein the four switches impart the incoming messages and, if a message is addressed to the second terminal system (222), the switches (211, 213) each transmit a copy of the message via communication channels (244, 245) to the second comparator (233) associated with the second terminal system (222), wherein the second comparator (233) opens a time window of duration D immediately after arrival of the chronologically first message, and, if no second copy of this message arrives at the second comparator (233) during this interval D, the second comparator (233) discards the message, and, if a second copy of the message arrives during this interval D, the second comparator (233) compares the two messages bit by bit and, if the comparison reveals a bit error, interrupts the transmission of the message and discards the message, and, if all bits of this message are identical, transmits the entire message via the second communication channel (252) to the second terminal system (222), wherein the second switch pair (202) proceeds analogously, and therefore, in the fault-free case, two checked copies of a message arrive at the terminal system and, if one of the two switch pairs (201, 202) is faulty or identifies a fault and discards the message, a correct message still arrives at the second terminal system (222), wherein the fault-tolerant switch (200), in addition to the messages received by the terminal systems, periodically transmits two synchronisation messages generated in the switch (200) to all connected terminal systems, wherein one synchronisation message is transmitted by the first switch pair (201) and the other synchronisation message is transmitted by the second switch pair (202), and wherein the time at which a synchronisation message arrives at a terminal system corresponds to the time that is contained in the data field of the synchronisation message.

## Revendications

1. Procédé servant à la synchronisation des pendules tolérante aux erreurs et servant à la communication en temps réel régulée dans le temps, tolérante aux erreurs en utilisant un certain nombre de systèmes terminaux (221, 222) et un ou plusieurs commutateurs (200) tolérants aux erreurs, lesquels sont respectivement reliés par l'intermédiaire d'au moins deux canaux de communication, **caractérisé en ce que** chaque commutateur (200) tolérant aux erreurs comporte une première paire de commutateurs (201) et une deuxième paire de commutateurs (202), sachant que la première paire de commutateurs (201) comporte un premier commutateur (211) et un deuxième commutateur (213) et que la deuxième paire de commutateurs (202) comporte un troisième commutateur (212) et un quatrième commutateur (214), et sachant que chacun des quatre commutateurs (211, 212, 213, 214) est relié aux trois autres commutateurs par l'intermédiaire de canaux de communication (240, 241), sachant que les quatre commutateurs établissent par l'intermédiaire d'un algorithme connu de synchronisation interne, basé sur les messages, tolérant aux erreurs, par l'intermédiaire des canaux de communication (240, 241) une base temporelle interne globale tolérante aux erreurs présentant une précision (P) connue, et sachant qu'une pluralité de systèmes terminaux (221, 222) peut être raccordée respectivement par l'intermédiaire d'un comparateur associé à un système terminal aux deux paires de commutateurs (201, 202), sachant qu'un premier système terminal (221) envoie respectivement une copie d'un message à envoyer à un système terminal à la première paire de commutateurs (201) par l'intermédiaire du premier canal de communication (251) et à la deuxième paire de commutateurs (202) par l'intermédiaire du deuxième canal de communication (253), sachant que le premier comparateur (231) envoie le message entrant au premier commutateur (211) par l'intermédiaire d'un canal de communication (242) et au deuxième commutateur (213) par l'intermédiaire d'un canal de communication (243) et que le troisième comparateur (232) envoie le message entrant au troisième commutateur (212) par l'intermédiaire d'un canal de communication (246) et au quatrième commutateur (214) par l'intermédiaire d'un canal de communication (247), et sachant que les quatre commutateurs transmettent les messages entrants, et si un message est adressé au deuxième système terminal (222), les commutateurs (211, 213) envoient respectivement une copie du message au deuxième comparateur (233) associé au deuxième système terminal (222) par l'intermédiaire de canaux de communication (244, 245), sachant que le deuxième comparateur (233) ouvre directement à réception du premier message dans le temps une fenêtre temporelle de durée D, et si dans cet intervalle D, aucune deuxième copie dudit message ne parvient au deuxième comparateur (233), le deuxième comparateur (233) refuse le message, et si dans ledit intervalle D, une deuxième copie du message arrive, le deuxième comparateur (233) compare de manière binaire les deux messages, et interrompt la transmission des messages et rejette le message si la comparaison révèle une erreur sur les bits, et si tous les bits dudit message sont identiques, envoie l'intégralité du message par l'intermédiaire du deuxième canal de communication (252) au deuxième système terminal (222), sachant que la deuxième paire de commutateurs (202) procède de la même manière, et donc, dans le cas exempt d'erreur, deux copies vérifiées d'un message parviennent au système terminal et, si une des deux paires de commutateur (201, 202) est erronée ou identifie une erreur et rejette le message, un message correct parvient tout de même au deuxième système terminal (222), sachant que le commutateur (200) tolérant aux erreurs envoie, en plus des messages reçus par les systèmes terminaux, par période deux messages de synchronisation générés dans le commutateur (200), à tous les systèmes terminaux raccordés, sachant qu'un message de synchronisation est envoyé par la première paire de commutateurs (201) et que l'autre message de synchronisation est envoyé par la deuxième paire de commutateurs (202), et sachant que le moment où un message de synchronisation parvient à un système terminal correspond au moment qui est contenu dans le champ de données du message de synchronisation.

2. Procédé selon la revendication 1, **caractérisé en ce que** les deux paires de commutateurs (201, 202) sont disposées de manière séparée l'une de l'autre spatialement.

3. Procédé selon la revendication 1 ou 2, **caractérisé en ce qu'**on utilise dans le cadre de la synchronisation de pendule des messages signés et qu'en conséquence il est possible de renoncer aux deux canaux de communication (241).

4. Procédé selon l'une quelconque des revendications 1 à 3, **caractérisé en ce qu'**un commutateur (200) tolérant aux erreurs adapte, à réception d'un message de synchronisation extérieur, son horloge interne synchronisée au temps prédéfini par le message de synchronisation extérieur.

5. Procédé selon l'une quelconque des revendications 1 à 4, **caractérisé en ce que** les commutateurs (211, 212, 213, 214) retardent les messages uniquement de quelques longueurs de bits et les transmettent aux comparateurs (231, 232, 233, 234) lors d'un procédé de traversée transparente.

6. Procédé selon l'une quelconque des revendications 1 à 5, **caractérisé en ce que** les comparateurs (231, 232, 233, 234) retardent les messages seulement de quelques longueurs de bits et les transmettent au système terminal lors d'un procédé de traversée transparente sans erreur.

7. Procédé selon l'une quelconque des revendications 1 à 6, **caractérisé en ce que** les systèmes terminaux (221, 222) raccordés à un commutateur (200) tolérant aux erreurs envoient un mélange de messages dépendant des événements, à largeur de bande limitée ou à régulation de temps.

8. Procédé selon l'une quelconque des revendications 1 à 7, **caractérisé en ce qu'**a priori des informations de planification sont chargées dans les commutateurs (211, 212, 213, 214) par l'intermédiaire du comportement dans le temps autorisé des systèmes terminaux (221, 222) de sorte qu'un commutateur puisse identifier un comportement erroné dans le temps d'un système terminal.

9. Procédé selon la revendication 8, **caractérisé en ce que** les informations de planification a priori sont pourvues au niveau du commutateur d'une signature électronique de l'expéditeur.

10. Procédé selon la revendication 8 ou 9, **caractérisé en ce que** les informations de planification a priori au niveau du commutateur sont chiffrées.

11. Procédé selon l'une quelconque des revendications 8 à 10, **caractérisé en ce que** les informations de planification a priori peuvent être modifiées de manière dynamique au cours du fonctionnement.

12. Procédé selon l'une quelconque des revendications 1 à 11, **caractérisé en ce que** les comparateurs (231, 232, 233, 234) fonctionnent lors du procédé de multiplexage.

13. Procédé selon l'une quelconque des revendications 1 à 12, **caractérisé en ce que** les diverses durées de propagation du signal sont compensées sur les canaux de communication (251, 252, 253, 254) par les paires de commutateurs (201, 202).

14. Procédé selon l'une quelconque des revendications 1 à 13, **caractérisé en ce que** les messages produits et absorbés par les systèmes terminaux correspondent à la norme Ethernet.

15. Appareil servant à la communication en temps réel à régulation de temps, tolérante aux erreurs constitué d'un ou de plusieurs commutateurs tolérants aux erreurs, qui sont respectivement reliés par l'intermédiaire d'au moins deux canaux de communication, **caractérisé en ce que** chaque commutateur (200) tolérant aux erreurs comporte deux paires de commutateurs (201, 202), sachant que la première paire de commutateurs (201) comporte un premier commutateur (211) et un deuxième commutateur (213) et que la deuxième paire de commutateurs (202) comporte un troisième commutateur (212) et un quatrième commutateur (214), et sachant que chacun des quatre commutateurs (211, 212, 213, 214) est relié aux trois autres commutateurs par l'intermédiaire des canaux de communication (240, 241), et sachant qu'une pluralité de systèmes terminaux peut être raccordée aux deux paires de commutateurs (201, 202) par l'intermédiaire d'un comparateur dédié associé au système terminal,
sachant que l'appareil est mis au point de sorte que pour respectivement une copie d'un message à envoyer à un système terminal, lequel message est envoyé par un premier système terminal (221) par l'intermédiaire du premier canal de communication (251) à la première paire de commutateurs (201) et par l'intermédiaire du deuxième canal de communication (253) à la deuxième paire de commutateurs (202), le premier comparateur (231) envoie le message entrant au premier commutateur (211) par l'intermédiaire d'un canal de communication (242) et au deuxième commutateur (213) par l'intermédiaire d'un canal de communication (243), et que le troisième comparateur (232) envoie le message entrant par l'intermédiaire d'un canal de communication (246) au troisième commutateur (212) et par l'intermédiaire d'un canal de communication (247) au quatrième commutateur (214), sachant que les quatre commutateurs transmettent les messages entrants, et que si un message est adressé au deuxième système terminal (222), les commutateurs (211, 213) envoient respectivement une copie du message au deuxième comparateur (233) associé au deuxième système terminal (222) par l'intermédiaire de canaux de communication (244, 245), sachant que le deuxième comparateur (233) ouvre directement à réception du premier message dans le temps une fenêtre temporelle de durée D, et que si dans cet intervalle D aucune deuxième copie dudit message ne parvient au deuxième comparateur (233), le deuxième comparateur (233) rejette le message, et que si dans ledit intervalle D une deuxième copie du message arrive, le deuxième comparateur (233) compare de manière binaire les deux messages et que si la comparaison révèle une erreur de bits, il interrompt la transmission des messages et rejette le message, et que si tous les bits dudit message sont identiques, il envoie l'intégralité du message au deuxième système terminal (222) par l'intermédiaire du deuxième canal de communication (252), sachant que la deuxième paire de commutateurs (202) procède de la même manière et qu'ainsi dans le cas sans erreur deux copies vérifiées d'un message parviennent au système terminal, et que si une des deux paires de commutateurs (201, 202) est erronée ou identifie une erreur et rejette le message, un message correct parvient tout de même au deuxième système terminal (222), sachant que le commutateur (200) tolérant aux erreurs envoie, en plus des messages reçus par les systèmes terminaux, de manière périodique deux messages de synchronisation générés dans le commutateur (200) à tous les systèmes terminaux raccordés, sachant qu'un message de synchronisation est envoyé par la première paire de commutateurs (201) et que l'autre message de synchronisation est envoyé par la deuxième paire de commutateurs (202), et sachant que le moment de l'arrivée d'un message de synchronisation dans un système terminal correspond au moment qui est contenu dans le champ de données du message de synchronisation.
